# EUROPEAN PATENT APPLICATION

(11) **EP 4 610 212 A1**
(43) Date of publication of application: **03.09.2025**
(21) Application number: 25159735.7
(22) Date of filing: 24.02.2025
(51) Int. Cl.: B66C 23/44

(54) **PIPE-LAYING MACHINE WITH ADJUSTMENT MECHANISM TO THE SLOPE OF THE GROUND**

(30) Priority: 28.02.2024 IT 202400004375
(71) Applicant: Scaip S.p.A., 43126 Parma (IT)
(72) Inventor: DONDI, Gian Paolo, Parma (IT); OPPIMITTI, LUCIANO, Varsi (PR) (IT)
(74) Representative: Silva, Valentina

(57) **Abstract**

Pipe-laying machine (100) for laying a load in particular of pipings in the construction of gas pipelines, oil pipelines and aqueducts comprising, a first and a second tracked undercarriage (60a, 60b), parallel to each other, which each comprise, a relative first and second track (65a, 65b), mounted on a first and a second roller track frame (61a, 61b) which are fixed laterally to a central body (30), said central body (30) adapted to support a frame (10) on which there are installed at least lifting means (70) for the movement of an arm (20) configured to move/lift/lay a load, in particular a piping, and wherein said frame (10) is rotatably connected to said central body (30) by means of an adjustment mechanism (80) adapted to tilt said frame (10) with respect to the tracked undercarriages (60a, 60b), according to a transverse axis (X) orthogonal to a direction of advancement of said tracked undercarriages (60a, 60b), wherein said adjustment mechanism (80) comprises a pin (81) rotatable integrally to the frame (10) with respect to the central body (30), wherein said pin (81) extends according to the transverse axis (X) and comprises at least a first and/or a second end portion (81a, 81b) extending through the first and/or the second roller track frame (61a, 61b) towards the outside of the machine (100) and wherein said first or second end portion (81a, 81b) is mechanically connected to said arm (20) arranged laterally to the machine (100).

## Description

### FIELD OF APPLICATION OF THE INVENTION

The present invention fits into the field of machines for laying pipings, in particular in the construction of gas pipelines, oil pipelines and aqueducts.

### STATE OF THE ART

Machines for laying pipings are known in the art, for example for the construction of gas pipelines, oil pipelines and aqueducts.

Typical operation of the pipe-laying machine includes lifting, transporting and lowering the piping.

Said machines are usually tracked, therefore movable on the ground by means of a pair of tracks.

Said machines are equipped with a generally lateral lifting arm with respect to the direction of advancement of the tracks.

Said machines normally comprise a counterweight extending from the opposite side of the arm.

Said machines also provide a cab to accommodate the operator.

For example, in the construction of conduits, the ground is generally dug to create a ditch in which the pipings that will form said conduits are positioned.

Generally said pipe-laying machines, in order to deposit the pipings, move laterally to the excavation therefore the tracks move substantially parallel to the excavation.

In most cases, the arm is lateral to the direction of advancement just to be able to deposit in the excavation next to the tracks.

Generally, both the arm and the cab are fixed and not movable with respect to the tracks.

The only movement allowed is that of the arm necessary to pick up, lift and deposit the piping; in fact, said arm is pivoted/hinged in a rotatable manner, generally directly outside the track, on a structure thereof bearing said roller track frame. In particular, the arm comprises a first end pivoted to the load-bearing structure of the track and a second end, connected to a cable adapted to be wound on a winch to rotate said arm bringing the second end away from/towards the ground.

Said pipe-laying machines are able to work well on flat grounds, whereas when they have to work on grounds with steep slopes, they often run the risk of tipping over.

In such cases it is the sizing of the counterweight and the distribution of the machine loads, which provides the limit to the maximum acceptable slope.

In fact, the positioning and the weight of the counterweight defines the position of the centre of gravity of the machine and therefore its tipping limit inclinations.

The inclination that a pipe-laying machine must face, in certain construction sites, can be both longitudinal, i.e. in the direction of advancement of the tracks and transverse, i.e. in the direction orthogonal to the advancement of the tracks.

For example document US7896178B2 shows a pipe-laying machine working on a ground with a longitudinal slope.

In this case, compensation is obtained thanks, in addition to the counterweight, also by the conformation of the arm that comprises a pulley block and a cable that supports a load block.

The pulley block is pivoted so as to partially compensate for the slope, thus keeping a part of the cable and the load block aligned with a direction of the force of gravity.

Therefore, the known pipe-laying machines are only able to adjust in a very limited way to the different types of ground in which they must operate and not in a flexible way.

### EXPOSURE AND ADVANTAGES OF THE INVENTION

The technical problem underlying the present invention is to make available a machine for laying pipings, in particular in the construction of gas pipelines, oil pipelines and aqueducts, which is structurally and functionally designed to overcome one or more of the limits set out above with reference to the cited prior art.

In the context of the aforementioned problem, a main object of the invention is to develop a machine for laying pipings, in particular in the construction of gas pipelines, oil pipelines and aqueducts, which allows it to adjust to the slope of the ground in which it must operate.

Another object of the invention is also to make available to the art a machine for laying pipings in particular in the construction of gas pipelines, oil pipelines and aqueducts as part of a flexible solution to the various operating situations and at a rather low cost.

In particular, the object of the invention is a pipe-laying machine for laying a load in particular of pipings in the construction of gas pipelines, oil pipelines and aqueducts.

Said machine comprises a first and a second tracked undercarriage, parallel to each other.

Preferably, said first and second tracked undercarriage each comprise a relative first and second track mounted on a first and a second roller track frame which are fixed laterally to a central body.

Preferably said central body is adapted to support a frame on which there are installed at least lifting means for the movement of an arm configured to move/lift/lay a load, in particular a piping.

Preferably said frame is rotatably connected to said central body by means of an adjustment mechanism.

Preferably, said adjustment mechanism is adapted to tilt said frame with respect to the tracked undercarriages according to a transverse axis orthogonal to a direction of advancement of said tracked undercarriages.

Preferably said adjustment mechanism comprises a pin rotatable integrally with the frame with respect to the central body.

Preferably said pin extends according to the transverse axis.

Preferably said pin comprises at least a first and/or a second end portion extending through the first and/or the second roller track frame towards the outside of the machine.

Preferably said first or second end portion is mechanically connected to said arm arranged laterally to the machine.

Advantageously the arm is connected to the first and/or second end portion of the pin in a position external to the first and/or second roller track frame.

In particular, the arm is connected to the first and/or second end portion of the pin at a lower end of said arm.

Preferably said lower end of the arm is connected to the first and/or second end portion of the pin in a rotatable manner according to a longitudinal axis parallel to the direction of advancement, so as to rotate said arm bringing an upper end thereof away from/towards the ground.

Preferably, on the frame there is installed a counterweight group opposed to the arm.

Preferably, the counterweight group comprises an articulated mechanism which is movable with respect to the frame so as to adjust to the position of the arm and/or of the lifted load.

Preferably said first or second end portion opposed to the one to which the arm is connected is mechanically connected to the counterweight group.

Preferably the pin is placed at an intermediate height between a lower ground support surface of the first and second track and an opposed upper return surface.

Preferably the pin is positioned at the centreline of the length of the tracked undercarriage, preferably at a centre of gravity of the machine.

Preferably, the first and/or second roller track frame comprises a connection element in which said first or second end portion of the pin is engaged.

Preferably said first or second end portion of the pin is engaged in the connection element in a rotatable manner about the transverse axis and preferably in a slidable manner along the transverse axis.

Preferably the central body comprises a first and a second crosspiece which are arranged parallel to the pin repetitively in the front position and in the rear position, by means of which the central body is connected to the first and/or to the second roller track frame.

Preferably the first and a second crosspiece are extendable in a direction parallel to the axis to increase or decrease the distance between the first and second roller track frame.

Preferably the adjustment mechanism comprises at least one extendable front piston or a pair of extendable front pistons.

Preferably each front piston comprises an upper end pivoted to the frame and a lower end pivoted to the central body, in particular respectively to a front portion of the central body.

Preferably the adjustment mechanism comprises at least one extendable rear piston or pair of extendable rear pistons, opposed to the front piston or to the pair of front pistons with respect to the pin.

Preferably each rear piston comprises an upper end pivoted to the frame and a lower end pivoted to the central body, in particular respectively to the rear portion of the central body opposed with respect to the one to which the lower end of the front piston is pivoted.

Preferably in order to rotate the pin about the transverse axis, the front piston or the pair of front pistons assumes an extended position, while the rear piston or the pair of rear pistons assumes an opposite retracted position or both vice versa.

Preferably the machine comprises guide means for preventing relative rotations between the frame and the central body about a vertical axis and/or the direction of advancement.

Preferably the guide means comprise at least one skid or a pair of skids which cooperates by contacting a corresponding raceway or pair of raceways placed at a first and/or second sidewall of the frame.

Preferably the raceway or pair of raceways are placed in proximity to the front portion and/or the rear portion of the central body.

Preferably the raceway or pair of raceways is made/installed on the frame and the skid or pair of skids is made/installed on the central body.

Preferably the raceway or pair of raceways extends according to an arc of circumference having a centre on the transverse axis.

These and other objects are reached thanks to the characteristics of the invention as set forth in the independent claims. The dependent claims outline preferred and/or particularly advantageous aspects of the invention.

Said purposes and advantages are all achieved by the machine for laying pipings, in particular in the construction of gas pipelines, oil pipelines and aqueducts subject-matter of the present invention, which is characterised by what is provided for in the claims below.

### BRIEF DESCRIPTION OF THE DRAWINGS

These and other features will be more apparent from the following description of certain embodiments illustrated by way of non-limiting example in the accompanying drawings.

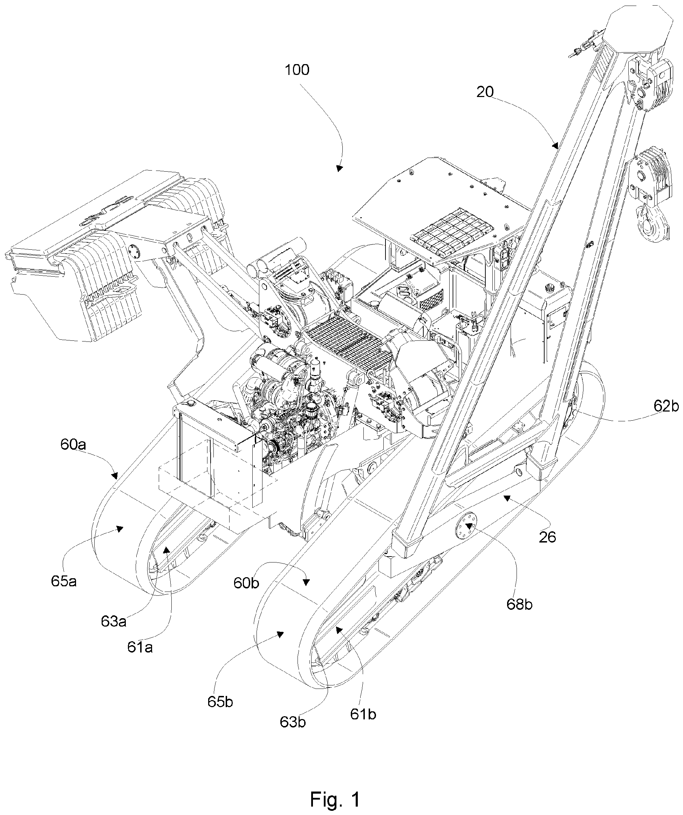

- Figure 1: illustrates an axonometric view of a machine for laying pipings on a ground with slope along the axis longitudinal to the tracks;

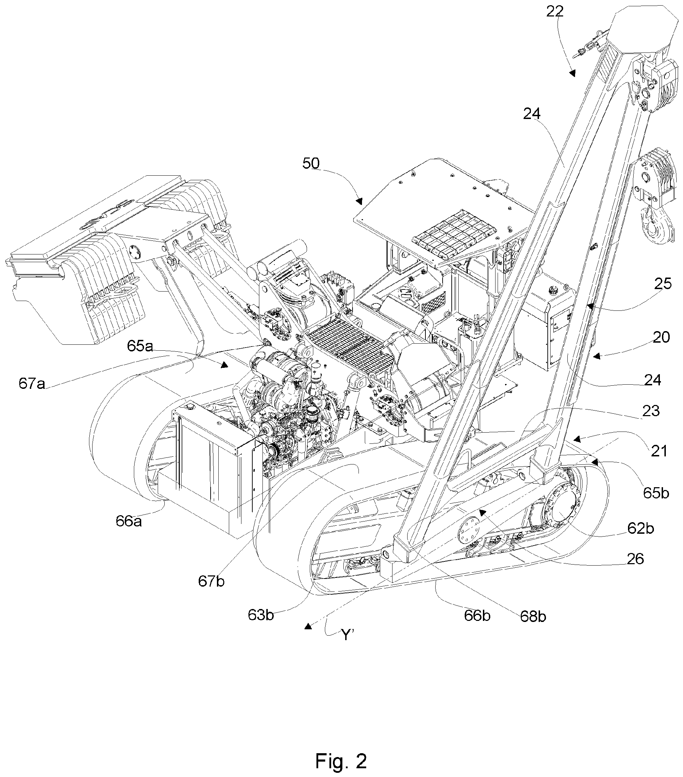

- Figure 2: illustrates an axonometric view of a machine for laying pipings on a ground with a different slope along the axis longitudinal to the tracks;

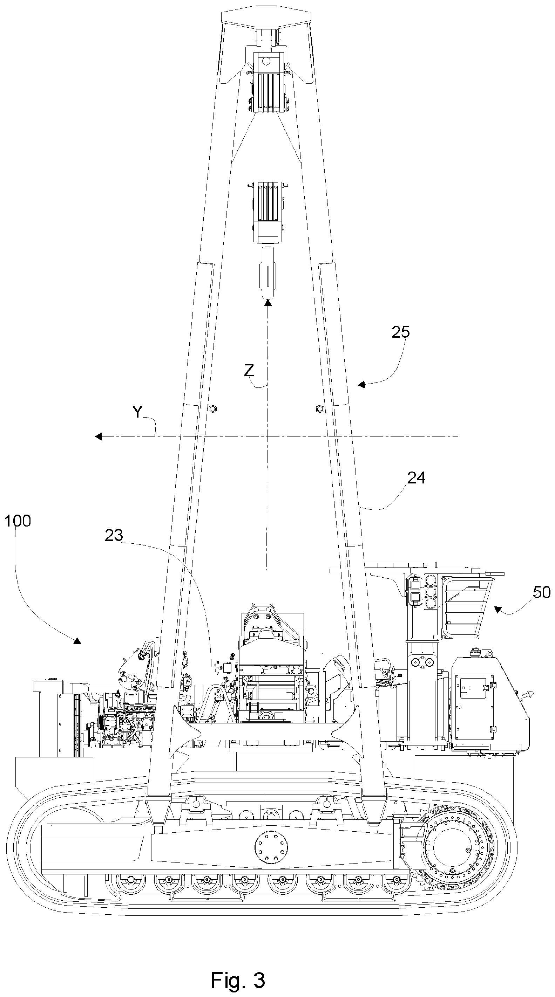

- Figure 3: illustrates a side view of a machine for laying pipings;

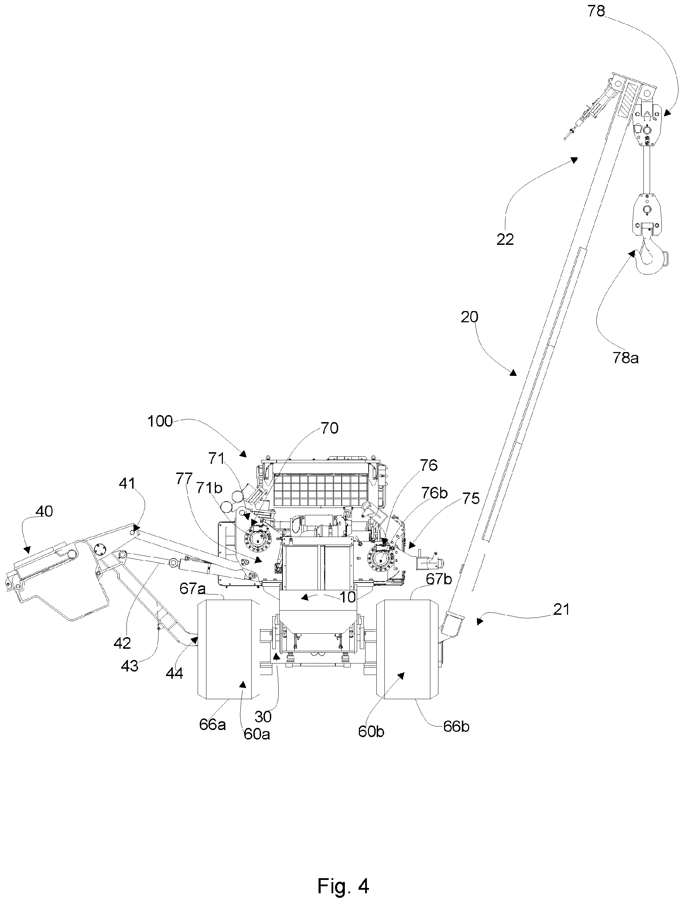

- Figure 4: illustrates a front view of a machine for laying pipings;

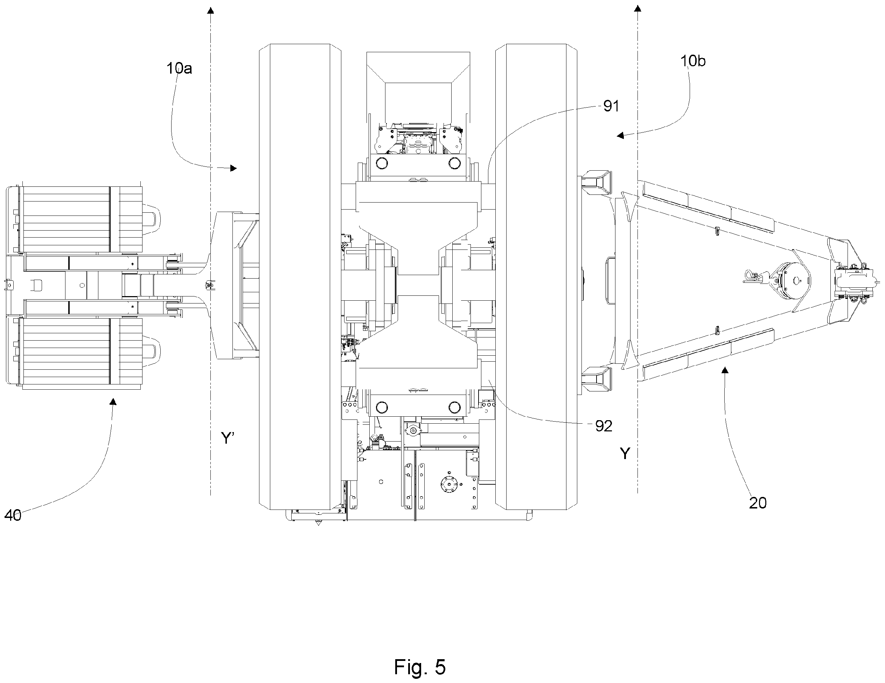

- Figure 5: illustrates a bottom view of a machine for laying pipings;

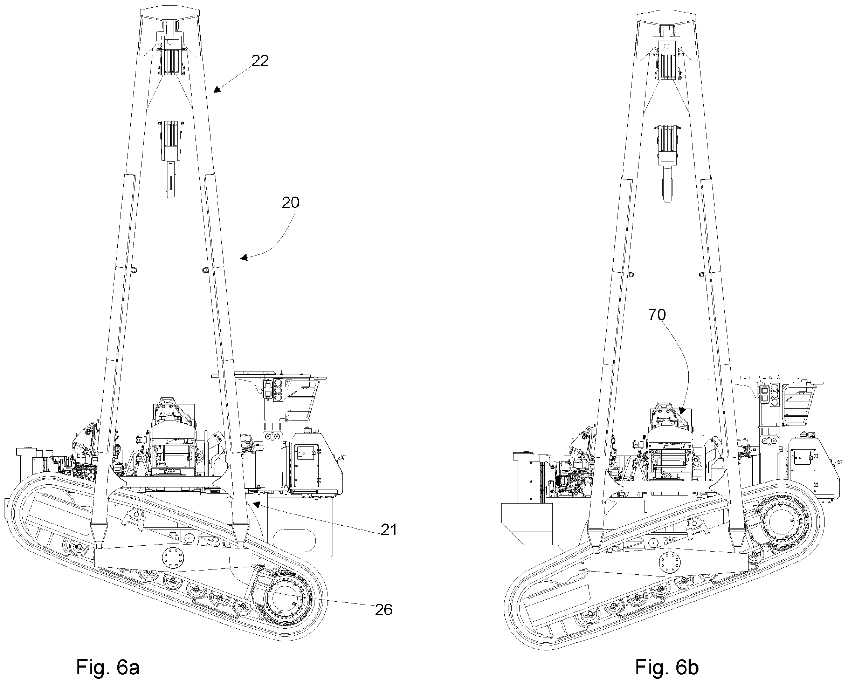

- Figure 6a, 6b: illustrates a side view of a machine for laying pipings with two slopes of the ground along the axis longitudinal to the tracks;
- Figure 7a, 7b: illustrates a sectional side view of a machine for laying pipings with two different slopes of the ground along the axis longitudinal to the tracks;

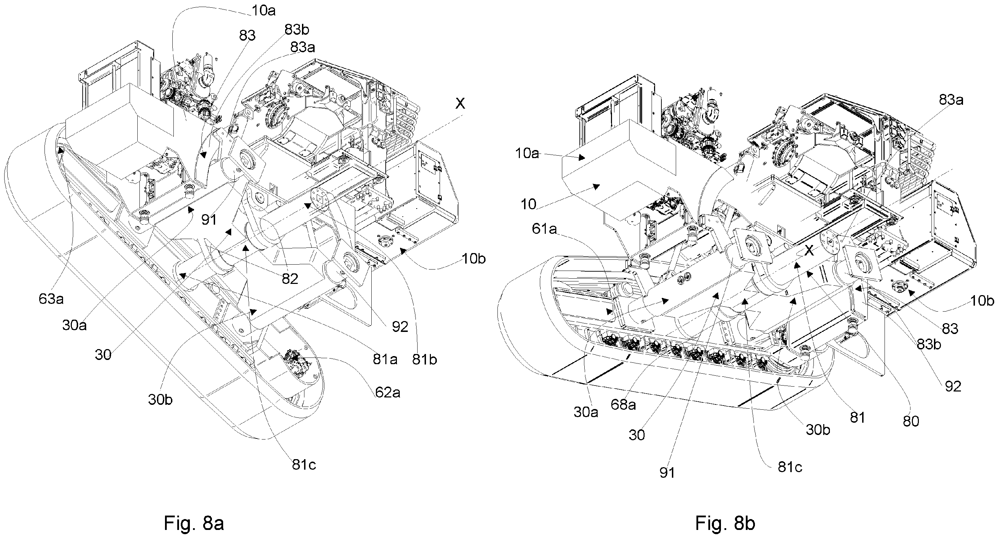

- Figure 8a, 8b: illustrates a sectional side view of a machine for laying pipings with two different slopes of the ground along the longitudinal axis to the tracks.

### DESCRIPTION OF THE INVENTION

With particular reference to the figures, there is depicted the pipe-laying machine 100, for laying pipings in particular in the construction of gas pipelines, oil pipelines and aqueducts.

Said pipe-laying machines 100 intervene after performing the excavation in which the pipings must be positioned for the construction of the pipelines.

According to one aspect of the invention, said machine 100 comprises, for the movement on the ground, a first and a second tracked undercarriage 60a, 60b that are parallel to each other.

Said tracked undercarriages 60a, 60b are particularly suitable for the movement on rough grounds and when the loads to be moved are large, as the risk of slipping is reduced and the advancement is facilitated even under critical conditions.

Said first and second tracked undercarriage 60a, 60b generally each comprise a relative first and second track 65a, 65b and a first and second roller track frame 61a, 61b.

Said first and second roller track frames 61a, 61b define the load-bearing structure of the respective first and second tracked undercarriage 60a, 60b.

Said first and second track 65a, 65b are generally an articulated element suitable for gripping the ground that is wound closing into a loop about the first and second roller track frames 61a, 61b, respectively.

In particular, in the first and second track 65a, 65b there can be identified a lower ground support surface 66a, 66b and an opposed upper return surface 67a, 67b.

In particular, the lower ground support surface 66a, 66b is arranged below the first and second roller track frame 61a, 61b, while the upper return surface 67a, 67b is arranged above the first and second roller track frame 61a, 61b.

According to a preferred embodiment said machine 100 comprises a central body 30 to which the two tracked undercarriages 60a, 60b for the movement of the machine 100 are mechanically connected.

In particular, the first and second roller track frame 61a, 61b are fixed laterally to the central body 30.

Generally said tracked undercarriages 60a, 60b are connected to a motor.

The tracked undercarriage 60a, 60b further comprises a drive wheel 62a, 62b and a return wheel 63a, 63b or track tensioner.

The drive wheel 62a, 62b is preferably arranged in a rear position with respect to the direction of travel of the machine 100.

Preferably said central body 30 is adapted to support a frame 10 of the machine 100.

In particular, on said frame 10 there are installed:
- preferably arm lifting means 70 for the movement of an arm 20 configured to move/lift/lay in particular the piping,
- preferably a control cab 50 suitable for accommodating an operator.

Preferably the arm lifting means 70 for the movement of the arm 20, comprise an arm lifting winch 71, which will be described below together with the arm 20.

According to one aspect of the invention the control cab 50 may comprise walls, ceiling and windows to protect the operator from the weather conditions and allow visibility to the operator.

The cab is preferably positioned on the upper surface of the frame 10.

The positioning of the cab 50 on the frame 10 is functional to allow the operator an unobstructed view forward, to the left and/or to the right.

In possible variants, the control cab 50 could also be provided with a support that rotates a few degrees with respect to the frame 10 in order to facilitate more the general view and improve the driving ergonomics.

Advantageously, the control cab 50 further comprises a seat, operating instruments and operating controls.

Preferably, on the frame 10 there is also housed the power unit for driving the pipe-laying machine 100.

According to a preferred embodiment, the pipe-laying machine 100 further comprises a counterweight group 40 installed on the frame 10.

Said counterweight group 40 has the purpose of balancing the weight of the arm 20 and/or of the suspended load.

The counterweight group 40 is preferably positioned on the frame 10, in an opposite position with respect to the side on which the arm 20 is present.

As depicted in the figures, the counterweight group 40 may comprise an articulated mechanism 41 which is movable with respect to the frame 10 so as to adjust to the position of the arm 20 and/or of the lifted load and optimize balancing.

In the figure, the articulated mechanism 41 comprises a preferably hydraulic actuator 42.

According to a preferred embodiment represented in the figure, the frame 10 extends between the first and second tracked undercarriage 60a, 60b.

In particular, the frame 10 extends below the upper return surface 67a, 67b of the first and second track 65a, 65b.

Preferably the frame 10 also extends above the tracked undercarriages 60a, 60b, in particular above the upper return surface 67a, 67b of the first and second track 65a, 65b.

Preferably said frame 10 has a length that is substantially similar to the length of the tracked undercarriages 60a, 60b, or optionally greater.

An object of the invention is a machine 100 in which between said frame 10 and said central body 30 there is interposed an adjustment mechanism 80.

In particular, said adjustment mechanism 80 is configured to tilt said frame 10 with respect to the tracked undercarriages 60 and therefore to the ground.

In the figures, there are defined a transverse axis X orthogonal to the direction of advancement of said tracked undercarriages 60a, 60b, a longitudinal axis Y oriented in the direction of advancement of said tracked undercarriages 60a, 60b, and a vertical axis Z.

According to one aspect of the invention, the frame 10 can be tilted by rotating about the transverse axis X orthogonal to the direction of advancement of said tracked undercarriages 60.

In particular to perform said inclination, said adjustment mechanism 80 comprises a pin 81.

In particular, said pin 81 extends according to the transverse axis X, which coincides with its axis of symmetry.

According to an advantageous form represented in the figure, the pin 81 is integrally fixed to the frame 10 and rotatably fixed with respect to the central body 30.

Thus the central body 30 rotates about the pin 81.

The pin 81 is preferably positioned at the centreline of the length of the tracked undercarriage 60a, 60b, as depicted in the figures.

Preferably, in the longitudinal direction, the pin 81 is positioned at a centre of gravity B of the machine 100.

According to a possible embodiment, the centre of gravity B of the machine 100 is placed centrally with respect to the length of the first and second tracked undercarriage 60a, 60b.

Preferably in the vertical direction, the pin 81 is positioned below the upper return surface 67a, 67b of the first and second track 65a, 65b.

Advantageously, the pin 81 is positioned at an intermediate height between the lower ground support surface 66a, 66b and the opposed upper return surface 67a, 67b.

An embodiment depicted in the figure provides that the pin 81 is positioned in height substantially on the centreline of the first and second roller track frame 61a, 61b.

This allows to keep the adjustment mechanism 80 at least partly dipped inside the two tracked undercarriages 60a, 60b.

Thanks to this solution, the height of the machine 100 is reduced and therefore its stability is improved.

In particular, the adjustment mechanism 80 is configured to tilt the frame 10 so that the centre of gravity B of the machine 100 falls within the support area 61 of the tracked undercarriages 60a, 60b.

This allows to avoid the risk of the machine 100 tipping over.

This ensures that the frame 10 can be adapted to the various ground conformations in which the machine 100 will be operating, allowing to adjust the inclination in the longitudinal direction of the frame 10, and of everything installed on it, in particular the arm 20 and the counterweight group 40.

This allows relative movement between the frame 10 integral with the pin 81 and the central body 30 so that, depending on the inclination of the ground, the central body 30 adjusts to said inclination of the ground, while the frame 10 and the arm remain in a horizontal position.

According to one embodiment, the pin 81 comprises one or more flanges 82, preferably placed in a central portion 81c of said pin 81.

Said one or more flanges 82 are mechanically connected to the frame 10 as represented in the figures.

Said one or more flanges 82 may for example be welded to the pin 81 and bolted to the frame 10.

According to an advantageous aspect of the invention, the pin 81 comprises at the sides of the central portion 81c at least a first and/or a second end portion 81a, 81b.

According to a preferred embodiment said first and/or second end portion 81a, 81b extends through the first and/or second roller track frame 61a, 61b towards the outside of the machine 100.

A preferred embodiment provides that the first and/or second roller track frame 61a, 61b comprises a connection element 68a, 68b in which said first or second end portion 81a, 81b of the pin 81 is engaged.

This allows the pin 81 to be supported not only centrally, but also at the ends optimizing load distribution and reducing bending stresses on the pin 81.

A preferred aspect provides that the connection element 68a, 68b, in which said first or second end portion 81a, 81b of the pin 81 is engaged, is adapted to allow a rotatable connection about the transverse axis X.

This allows relative rotation between the pin 81 and the roller track frames 61a, 61b being in turn integral with the central body 30.

According to a further advantageous aspect, the connection element 68a, 68b, in which said first or second end portion 81a, 81b of the pin 81 is engaged, is adapted to allow a slidable connection along the transverse axis X.

Thanks to this solution, it is possible to vary the distance between the two roller track frames 61a, 61b.

According to an advantageous aspect, the central body 30 comprises a first and a second crosspiece 91, 92 which are arranged parallel to the pin 81.

In particular, said first and second crosspiece 91, 92 are arranged in a front position and in a rear position with respect to the pin 81.

By means of said first and second crosspiece 91, 92 the central body 30 is connected to the first and/or second roller track frame 61a, 61b.

According to an advantageous aspect, the first and second crosspiece 91, 92 are extendable in a direction parallel to the axis X.

Thanks to this solution it is possible to increase or reduce the distance between the first and second roller track frame 61a, 61b.

Thanks to this solution it is possible to increase the carriageway to increase stability or decrease the carriageway to facilitate the transport of the machine 100.

According to a preferred aspect, said first or second end portion 81a, 81b is mechanically connected to the arm 20 arranged laterally to the machine 100.

In particular, the arm 20 rotates integrally with the pin 81 about the transverse axis X.

Thanks to this solution, the arm 20 tilts together with the frame 10 with respect to the central body 30 and consequently with respect to the tracked undercarriages 60a, 60b.

According to one aspect of the invention, the arm 20 is connected to the first and/or second end portion 81a, 81b of the pin 81 in a position external to the first and/or second roller track frame 61a, 61b.

According to one aspect of the invention, the arm 20 is connected to the first and/or second end portion 81a, 81b of the pin 81 at a lower end 21 of said arm 20.

A preferred embodiment provides that the first or second end portion 81a, 81b opposed to the one to which the arm 20 is connected is mechanically connected to the counterweight group 40.

In the figure in particular there is in the counterweight group 40 a support element 43, which supports the counterweight group 40.

Said support element 43 is mechanically connected to the first or second end portion 81a, 81b.

According to one aspect of the invention, the support element 43 is connected to the first and/or second end portion 81a, 81b of the pin 81 in a position external to the first and/or second roller track frame 61a, 61b.

Therefore, the support element 43 rotates together with the pin 81 in conjunction with the counterweight group 40 installed directly on the frame 10.

Thanks to this solution, the counterweight group 40 tilts together with the frame 10 with respect to the central body 30 and consequently with respect to the tracked undercarriages 60a, 60b

In order to perform inclination of the frame 10 and arm 20 and preferably of the counterweight group 40 with respect to the central body 30 and the tracked undercarriages 60a, 60b, the adjustment mechanism 80 preferably comprises at least one front piston 85, which is extendable.

Alternatively, the adjustment mechanism 80 may comprise a pair of extendable front pistons 85.

According to a possible embodiment depicted in the figure, each front piston 85 comprises an upper end 85b pivoted to the frame 10 and a lower end 85a pivoted to the central body 30.

In particular, the lower end 85a is mechanically connected to a front portion 30a or a rear portion 30b of the central body 30 which are opposed to the pin 81.

An embodiment variant may provide that the adjustment mechanism 80 further comprises at least one extendable rear piston 86 or a pair of extendable rear pistons 86, which are opposed to the front piston 85 or to the pair of front pistons 85 with respect to the pin 81.

According to a preferred form the front and rear piston or pair of pistons 85, 86 are interposed between the tracked undercarriages 60a, 60b.

In particular, each rear piston 86 comprises an upper end 86b pivoted to the frame 10 and a lower end 86a pivoted to the central body 30.

In particular, the lower end 86a of the rear piston 86 is mechanically connected to the front portion 30a or to the rear portion 30b of the central body 30 opposed to the one to which the lower end 85a of the front piston 85 is pivoted.

Said lower end 85a, 86a is preferably positioned above the transverse axis X of rotation of the pin 81.

Said first and second piston 85, 86, in particular comprise a sleeve 85c, 85c and a rod 85d, 86d which is configured to extend/retract from the sleeve 85c, 86c.

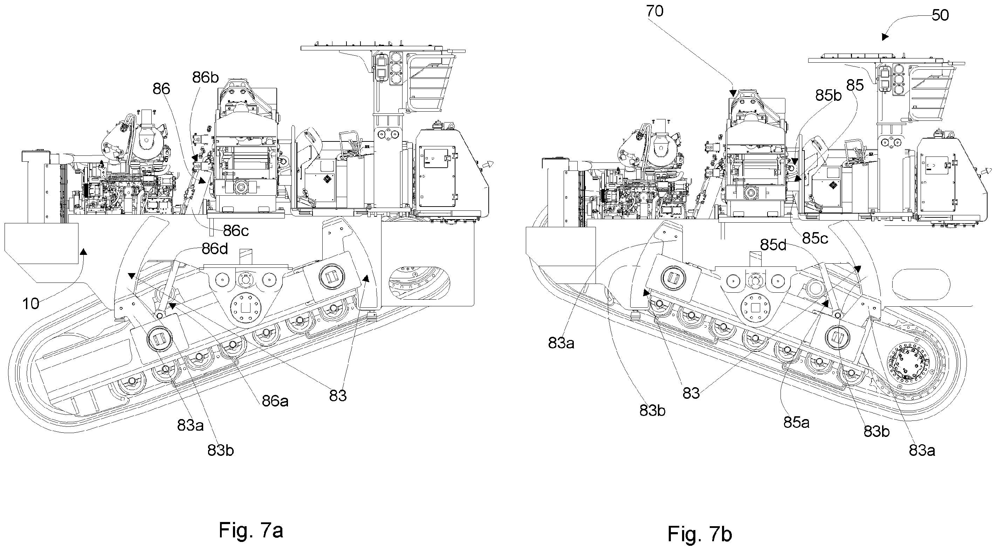

Figure 7a, 7b depicts a preferred form in which the lower end 85a, 86a is at the sleeve 85c, 85c of the piston 85, 86, while the upper end 85b, 86b is at the rod 85d, 86d of the piston 85, 86.

Also the opposite configuration falls within the possible ones, in which the lower end 85a, 86a is at the rod 85d, 86d of the piston 85, 86, while the upper end 85b, 86b is at the sleeve 85c, 85c of the piston 85, 86.

A preferred embodiment provides that in order to rotate the pin 81 about the transverse axis X, the front piston 85 or the pair of front pistons 85 assumes an extended position, while the rear piston 86 or the pair of rear pistons 86 assumes an opposite retracted position or vice versa.

This allows relative movement between the frame 10 integral with the pin 81, with respect to the central body 30 so that, depending on the inclination of the ground, the central body 30 adjusts to said inclination of the ground, while the frame 10 and the arm 20 and preferably the counterweight group 40, remain in a horizontal position.

To ensure that said relative rotation movement about the transverse axis X between the frame 10 integral with the pin 81, and the central body 30 takes place reliably, the machine 100 may comprise guide means 83.

Especially during the steering phase of the machine 100, stresses can be generated that tend to generate relative rotations between the frame 10 and the central body 30 about the vertical axis Z and/or the direction of advancement Y.

This is mainly due to the clearance tolerances present between the various components.

An embodiment provides that the guide means 83 comprise at least one skid 83a or a pair of skids 83a which cooperates by contacting a corresponding raceway 83b or pair of raceways 83b placed at a first and/or second sidewall 10a, 10b of the frame 10.

To increase the guide efficiency preferably the raceway 83b or pair of raceways 83b are positioned in proximity to the front portion 30a and/or the rear portion 30b of the central body 30.

This allows, moving away from the transverse rotation axis X, to reduce the force acting on the guide.

Further preferably the raceway 83b is made/installed on the frame 10 and the skid 82a is made/installed on the central body 30, as depicted in the figures.

The raceway 83b may be installed on the frame 10, for example being a bolted profile, or may be made directly on the frame 10, for example as a milled profile.

In order to guide the relative movement between the frame 10 and the central body 30, throughout the rotation about the transverse axis X, the raceway 83a or pair of raceways 83b extends according to an arc of circumference having centre on the transverse axis X.

The figure depicts a preferred embodiment in which the machine 100 comprises a pair of raceways 83b placed at both the first and second sidewall 10a, 10b of the frame 10.

This guarantees maximum reliability of correct positioning.

According to an aspect of the invention, in order to allow the movement of the arm 20, necessary for gripping, lifting and depositing the piping, advantageously the lower end 21 of the arm 20 is connected to the first and/or second end portion 81a, 81b of the pin 81 in a rotatable manner according to the longitudinal axis Y parallel to the direction of advancement.

Preferably, between the first and/or second end portion 81a, 81b and said lower end 21 of the arm 20 there is interposed a junction element 26.

In particular, said junction element 26 is fixed integrally to the first and/or second end portion 81a, 81b.

Preferably the lower end 21 of the arm 20 is pivoted to said junction element 26.

This allows said arm 20 to be rotated bringing an upper end 22 thereof away from/towards the ground.

The term pivoted means the possibility of a rotation about a single-axis pin, for example a hinge or a double-axis pin.

Therefore, the arm 20 is rotatable with respect to the frame 10, at its first end 21.

As depicted in the figure, preferably also the counterweight group 40, and in particular the support element 43, which supports the counterweight group 40 is connected to the first or second end portion 81a, 81b of the pin 81 in a rotatable manner according to an opposed longitudinal axis Y' parallel to the direction of advancement.

Preferably, between the first or second end portion 81a, 81b and said support element 43 there is interposed an opposed junction element 44.

In particular, said opposed junction element 44 is fixed integrally to the first or second end portion 81a, 81b.

Preferably, the support element 43 of the counterweight group 40 is pivoted to said opposed junction element 44.

This allows said counterweight group 40 to be rotated bringing it away from/towards the ground.

Therefore, the counterweight group 40 is rotatable with respect to the frame 10, at the support element 43 according to the opposed longitudinal axis Y' parallel to the direction of advancement.

In particular, the movement about the opposed longitudinal axis Y' takes place by means of the actuator 42.

A possible embodiment provides that said actuator 42 has an end fixed to the frame 10 and an opposed end fixed to the support element 43.

Said actuator 42 by extending or retracting causes the inclination of the counterweight group 40 to vary at the opposed junction element 44 on which it is pivoted.

As regards instead the movement about the longitudinal axis Y of the arm 20, this preferably takes place by means of the arm lifting winch 71.

Said winch comprises a drum for lifting the rotating arm 71b preferably driven by a motor, for example of the hydraulic type.

The arm lifting winch 71 comprises a control cable windable about the arm lifting drum 71b.

Preferably the second end 22, of said arm 20 opposite to the first end 21, is connected to the control cable of the arm lifting means 70, adapted to wind/unwind on the arm lifting drum 71b of the arm lifting winch 71 in order to rotate said arm 20 bringing the second end 22 away from/towards the ground.

The use of arm lifting means 70 of the winch type is particularly advantageous as it allows to have a more favourable centre of gravity compared to the use of lifting means of the hydraulic cylinder type.

In fact, the weight of the arm lifting means 70 of the winch type is unloaded on the frame 10 and does not weigh on the arm 20 as it happens when the arm 20 is moved by means of the cylinder; moreover, the cylinder for connecting to the arm 20 protrudes from the tracked undercarriages 60a, 60b, while the arm lifting means 70 of the winch type are positioned so that their centre of gravity remains inside the tracked undercarriages 60a, 60b.

This solution is simple and economical and allows to exert a sufficient force to perform the movement of the arm 20 without the aid of other systems such as hydraulic cylinders.

At said second end 22, it can also be provided for load lifting means 75 which are adapted to engage with the piping.

According to an aspect of the invention, said load lifting means 75 preferably comprise a hoist 78 pivoted on the second end 22 of the arm 20.

Preferably, a coupling element 78a is hung on said hoist 78 away from the end 22.

At said coupling element 78a, there can be removably installed one or more belts or bands which are configured to engage with the piping, for example by embracing a portion of its outer surface.

Said load lifting means 75 can operate in a manner unconstrained from the arm lifting means 70.

Therefore, said load lifting means 75 allow to lift or lower the piping even if the arm 20 is not rotating.

Preferably said load lifting means 75 comprise a load lifting winch 76.

In particular, the load lifting winch 76 has a horizontal axis and comprises a rotating load lifting drum 76b preferably driven by means of a motor, for example of the hydraulic type.

The load lifting winch 76 comprises a control cable that can be wound about the load lifting drum 76b.

Said control cable extends up to the hoist 78 and is engaged in a plurality of pulleys of the hoist 78, so as to bring the coupling element 78a towards/ away from the second end 22 of the arm 20.

In particular, the unwinding of the control cable from the load lifting drum 76b lowers the coupling element 78a, while the winding of the control cable about the load lifting drum 76b lifts the coupling element 78a, to respectively lower or lift the piping.

Advantageously, the load lifting means 75 are preferably installed on the frame 10.

In a preferred embodiment depicted in the figure, the pipe-laying machine 100 comprises a frame 77 installed on the frame 10.

Said frame 77 is configured to support the arm lifting winch 71 and preferably also the load lifting winch 76.

This simplifies realisation ensuring that the winches 71 and 76 unload their weight on the frame 10 and do not weigh down on the arm 20.

Said frame 77 as depicted in the figure, provides that the load lifting winch 76 is positioned in front of the arm lifting winch 71, with respect to the arm 20.

This positioning is aimed at preventing the control cables of the load lifting winch 76 and of the arm lifting winch 71 from interfering with each other until they touch.

Furthermore, preferably the arm lifting winch 71 is placed at a higher position on the frame 10 than the load lifting winch 76.

This allows the maximum possibility of lowering the arm 20 without interfering with the dimensions of the load lifting means 75.

An aspect of the invention provides for the frame 77 to be positioned in front of the control cab 50.

This allows to optimize the space on the frame 10, and at the same time give the operator the possibility to also control the unwinding in particular of the control cable.

The arm 20 may comprise a framing 25 preferably comprising one or more primary structural elements 24 and preferably one or more reinforcing crosspieces 23.

Said framing 25 can be symmetrical, i.e. said two primary structural elements 24 can be tilted at the same angle with respect to a vertical axis Z.

The framing 25 can also be asymmetrical, i.e. said two primary structural elements 24, can be tilted at different angles with respect to the vertical axis Z.

The primary structural elements 24 may be made of square or rectangular steel tubes.

The figure depicts an arm 20 with a framing 25 comprising two primary structural elements 24 and a crosspiece 23 such as to assume an A-like symmetrical shape.

In particular, it is possible to reach in the longitudinal direction, an inclination of between 0 and 20° or 30°, uphill, and downhill.

It is understood however that what is described above has a value of non limiting example, therefore, possible variants of detail that may be required for technical and/or functional reasons are considered from now as to fall within the same protective scope defined by the claims indicated below.

## Claims

1. Pipe-laying machine (100) for laying a load in particular of pipings in the construction of gas pipelines, oil pipelines and aqueducts comprising, a first and a second tracked undercarriage (60a, 60b), parallel to each other, which each comprise a relative first and second track (65a, 65b), mounted on a first and a second roller track frame (61a, 61b) which are fixed laterally to a central body (30), said central body (30) adapted to support a frame (10) on which there are installed at least lifting means (70) for the movement of an arm (20) configured to move/lift/lay a load, in particular a piping, and wherein said frame (10) is rotatably connected to said central body (30) by means of an adjustment mechanism (80) adapted to tilt said frame (10) with respect to the tracked undercarriages (60a, 60b), according to a transverse axis (X) orthogonal to a direction of advancement of said tracked undercarriages (60a, 60b), **characterized in that** said adjustment mechanism (80) comprises a pin (81) rotatable integrally to the frame (10) with respect to the central body (30), wherein said pin (81) extends according to the transverse axis (X) and comprises at least a first and/or a second end portion (81a, 81b) extending through the first and/or the second roller track frame (61a, 61b) towards the outside of the machine (100) and wherein said first or second end portion (81a, 81b) is mechanically connected to said arm (20) arranged laterally to the machine (100).

2. Pipe-laying machine (100) according to claim 1, wherein the arm (20) is connected to the first and/or second end portion (81a, 81b) of the pin (81) in a position external to the first and/or second roller track frame (61a, 61b) and at a lower end (21) of said arm (20).

3. Pipe-laying machine (100) according to any one of the preceding claims, wherein a lower end (21) of the arm (20) is connected to the first and/or second end portion (81a, 81b) of the pin (81) in a rotatable manner according to a longitudinal axis (Y) parallel to the direction of advancement, so as to rotate said arm (20) bringing an upper end (22) thereof away from/towards the ground.

4. Pipe-laying machine (100) according to any one of the preceding claims, wherein on the frame (10) there is installed a counterweight group (40) opposed to the arm (20) preferably comprising an articulated mechanism (41) which is movable with respect to the frame (10) so as to adjust to the position of the arm (20) and/or of the lifted load.

5. Pipe-laying machine (100) according to claim 4, wherein said first or second end portion (81a, 81b) opposed to the one to which the arm (20) is connected is mechanically connected to the counterweight group (40).

6. Pipe-laying machine (100) according to any one of the preceding claims, wherein the pin (81) is placed at an intermediate height between a lower ground support surface (66a, 66b) of the first and second track (65a, 65b) and an opposed upper return surface (67a, 67b).

7. Pipe-laying machine (100) according to any one of the preceding claims, wherein the pin (81) is positioned at the centreline of the length of the tracked undercarriage (60a, 60b) preferably at a centre of gravity (B) of the machine (100).

8. Pipe-laying machine (100) according to any one of the preceding claims, wherein the first and/or second roller track frame (61a, 61b) comprises a connection element (68a, 68b) in which said first or second end portion (81a, 81b) of the pin (81) is engaged preferably in a rotatable manner about the transverse axis (X) and slidable along the transverse axis (X).

9. Pipe-laying machine (100) according to any one of the preceding claims, wherein the central body (30) comprises a first and a second crosspiece (91, 92) which are arranged parallel to the pin (81) repetitively in a front position and in a rear position, by means of which the central body (30) is connected to the first and/or to the second roller track frame (61a, 61b).

10. Pipe-laying machine (100) according to claim 9, wherein the first and a second crosspiece (91, 92) are extendable in a direction parallel to the axis (X) to increase or decrease the distance between the first and the second roller track frame (61a, 61b).

11. Pipe-laying machine (100) according to any one of the preceding claims, wherein the adjustment mechanism (80) comprises at least one extendable front piston (85) or a pair of extendable front pistons (85), wherein each front piston (85) comprises an upper end (85b) pivoted to the frame (10) and a lower end (85a) pivoted to the central body (30), in particular respectively to a front portion (30a) of the central body (30).

12. Pipe-laying machine (100) according to claim 11, wherein the adjustment mechanism (80) comprises at least one extendable rear piston (86) or a pair of extendable rear pistons (86), opposed to the front piston (85) or to the pair of front pistons (85) with respect to the pin (81) and wherein each rear piston (86) comprises an upper end (86b) pivoted to the frame (10) and a lower end (86a) pivoted to the central body (30), in particular respectively to the rear portion (30b) of the central body (30) opposed with respect to that to which the lower end (85a) of the front piston (85) is pivoted.

13. Pipe-laying machine (100) according to any one of claims 11 to 12, wherein in order to rotate the pin (81) about the transverse axis (X), the front piston (85) or the pair of front pistons (85) assumes an extended position, while the rear piston (86) or the pair of rear pistons (86) assumes an opposite retracted position, or both vice versa.

14. Pipe-laying machine (100) according to any one of the preceding claims, comprising guide means (83) for preventing relative rotations between the frame (10) and the central body (30) about a vertical axis (Z) and/or the direction of advancement (Y).

15. Pipe-laying machine (100) according to claim 14, wherein the guide means (83) comprise at least one skid (83a) or a pair of skids (83a) which cooperates by contacting a corresponding raceway (83b) or pair of raceways (83b) placed at a first and/or second sidewall (10a, 10b) of the frame (10), preferably in proximity to the front portion (30a) and/or the rear portion (30b) of the central body (30) and wherein preferably the raceway (83b) or pair of raceways (83b) is made/installed on the frame (10) and the skid (83a) or pair of skids (83a) is made/installed on the central body (30), and wherein preferably the raceway (83a) or pair of raceways (83b) extends according to an arc of circumference having centre on the transversal axis (X).
